(19) **Europäisches Patentamt European Patent Office Office européen des brevets**

(11) **EP 2 823 880 B1**

(12) **EUROPEAN PATENT SPECIFICATION**

(45) Date of publication and mention
of the grant of the patent:
**13.04.2016 Bulletin 2016/15**

(51) Int Cl.:
**B01F 5/06** (2006.01)     **F01N 3/20** (2006.01)
**F01N 3/28** (2006.01)     **B01F 3/04** (2006.01)

(21) Application number: **14175393.9**

(22) Date of filing: **02.07.2014**

(54) **Exhaust gas purification apparatus for an internal combustion engine**

Abgasreinigungsvorrichtung für einen Verbrennungsmotor

Appareil de purification de gaz d'échappement pour moteur à combustion interne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2013 JP 2013142475**

(43) Date of publication of application:
**14.01.2015 Bulletin 2015/03**

(73) Proprietor: **TOYOTA JIDOSHA KABUSHIKI
KAISHA
Toyota-shi, Aichi-ken, 471-8571 (JP)**

(72) Inventors:
• **Uenishi, Toru
  Toyota-shi, Aichi-ken, 471-8571 (JP)**
• **Yoshida, Kohei
  Toyota-shi, Aichi-ken, 471-8571 (JP)**

(74) Representative: **Kuhnen & Wacker
Patent- und Rechtsanwaltsbüro
Prinz-Ludwig-Straße 40A
85354 Freising (DE)**

(56) References cited:
**EP-A1- 2 128 398      EP-A1- 2 518 287
WO-A1-03/025356       US-A1- 2008 047 260
US-A1- 2012 144 812**

EP 2 823 880 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[TECHNICAL FIELD]

The present invention relates to an exhaust gas purification apparatus for an internal combustion engine.

[BACKGROUND ART]

An additive agent such as a reducing agent, an oxidizing agent or the like may be injected into an exhaust gas in an internal combustion engine. It is desirable for this additive agent to disperse uniformly in the radial direction of a catalyst, before arriving at the downstream catalyst, etc. On the other hand, there has been known a technology in which a mixer having a spiral passage formed therein, a flow regulating member, and a catalyst are arranged sequentially from an upstream side (for example, refer to a first patent literature or a second patent literature). The patent application US 2008/0047260 A1 discloses an exhaust aftertreatment system including a mixer provided by a spiral chamber generating a turning flow.

Here, if an exhaust passage bends after a swirling or turning flow has been generated by a mixer, uneven or nonuniform distribution of the additive agent will occur in the radial direction of the exhaust passage, and so, there will be a fear that the concentration of the additive agent in the exhaust gas may become nonuniform. Accordingly, it is desirable that after the swirling flow has been generated in the exhaust passage, the exhaust passage extend to the catalyst in a linear or straight form. That is, it is desirable that a central axis of the swirling flow extend to the catalyst in the linear or straight form as it is. For this reason, in general, the mixer and the catalyst are disposed in the middle of the linear or straight exhaust passage. However, when the mixer is disposed in the middle of the straight exhaust passage, and further, when the catalyst is disposed at the downstream side of the mixer, the catalyst will be made away from the internal combustion engine. For this reason, the temperature of the exhaust gas will become easy to fall by the time the exhaust gas from the internal combustion engine arrives at the catalyst, so the temperature of the catalyst will also tend to fall easily. In addition, at the time of the cold start of the internal combustion engine, it takes more time for the temperature of the catalyst to rise, and hence, it will take a longer period of time by the time the purification performance of the catalyst is exhibited. Moreover, there may be no room to form the straight exhaust passage.

[PRIOR ART REFERENCES]

[PATENT LITERATURES]

[First Patent Literature] Japanese Patent Laid-Open Publication No. 2011-092838
[Second Patent Literature] Japanese Patent Laid-Open Publication No. 2012-225316
[Third Patent Literature: International Publication No. 2010/146285
[Fourth Patent Literature] Japanese Patent Laid-Open Publication No. 2010-031717

[SUMMARY OF THE INVENTION]

[PROBLEMS TO BE SOLVED BY THE INVENTION]

The present invention has been made in view of the problems as mentioned above, and the object of the invention is to arrange a catalyst close to an internal combustion engine, while making uniform the concentration of an additive agent in an exhaust gas flowing into the catalyst.

[MEANS FOR SOLVING THE PROBLEMS]

In order to attain the above-mentioned object, an exhaust gas purification apparatus for an internal combustion engine according to the present invention includes:

     a supply device that supplies an additive agent into an exhaust passage of the internal combustion engine;
     a catalyst that is arranged in said exhaust passage at the downstream side of said supply device;
     a bent portion that is a location at which said exhaust passage bends, and which is formed at the downstream side of said supply device and at the upstream side of said catalyst; and
     a swirling flow generation part that is formed in said bent portion so as to permit an exhaust gas to come therein on an extension line in a direction of movement of the exhaust gas which flows toward said bent portion at the upstream side thereof, thereby to generate a swirling flow in which the exhaust gas swirls around a central axis of the exhaust passage at the downstream side of said bent portion, wherein said swirling flow generation part being provided with a spiral portion that is formed into a spiral shape around the central axis of the exhaust passage at the downstream side of said bent portion, at least a part of said spiral portion is located on an extension line of the exhaust passage upstream of said bent portion, and the exhaust passage at the downstream side of said bent portion linearly extending up to the catalyst in the direction of an axis of rotation of the swirling flow.

The additive agent may also be a reducing agent or an oxidizing agent. The additive agent is decided according to the catalyst. The supply device may be an injection valve which injects the additive agent into the exhaust gas, or may be one which discharchges the additive agent from the interior of each cylinder of the internal combustion engine to the exhaust passage. The bent portion is the location in which the exhaust passage bends, wherein a direction of the central axis of the exhaust passage at the upstream side of the bent portion and a direction of the central axis of the exhaust passage at the downstream side of the bent portion change with respect to each other. For example, a point or portion at which a direction of the central axis of the exhaust passage changes may also be used as the bent portion, or a predetermined range including a point at which a direction of the central axis of the exhaust passage changes may also be used as the bent portion. In addition, those portions of the exhaust passage lying at the upstream side and at the downstream side of the bent portion may also be straight passages, respectively. Moreover, the exhaust passage may also further bend at the upstream side of the bent portion and at the downstream side of the supply device. Further, the exhaust passage at the downstream side of the bent portion may also linearly extend up to the catalyst in the direction of an axis of rotation of the swirling flow.

The swirling flow generation part generates the swirling flow in the exhaust passage. The swirling flow referred to herein is a flow of the exhaust gas which goes to the downstream side of the exhaust passage, while rotating in a spiral manner. This swirling flow swirls around the central axis of the exhaust passage at the downstream side of the bent portion. That is, the axis of rotation of the swirling flow coincides substantially with the central axis of the exhaust passage at the downstream side of the bent portion. For this reason, the axis of rotation of the swirling flow does not coincide with the central axis of the exhaust passage at the upstream side of the bent portion. That is, the exhaust gas at an angle with respect to the axis of rotation of the swirling flow flows toward the swirling flow generation part. Then, the direction of the exhaust gas flowing toward the swirling flow generation part becomes close to the direction of rotation of the swirling flow. Here, note that a point in time at which the exhaust gas impinges against the swirling flow generation part may also be used as a point in time at which the exhaust gas flows into the swirling flow generation part. In addition, a point in time at which the direction of flow of the exhaust gas is changed by the swirling flow generation part may also be used as the point in time at which the exhaust gas flows into the swirling flow generation part. Then, on the extension line of the direction of movement of the exhaust gas flowing toward the bent portion at the upstream side of the bent portion, the exhaust gas impinges against the swirling flow generation part, whereby it can be said that the exhaust gas flows into the swirling flow generation part.

Here, if the exhaust gas flows into the swirling flow generation part from the direction of the axis of rotation of the swirling flow, it will become necessary to arrange a portion of the exhaust passage, through which the exhaust gas flows in the axial direction of the swirling flow, at the upstream side of the swirling flow generation part, and hence, there will be a fear that the swirling flow generation part may be disposed away from the internal combustion engine. As a result of this, there will also be a fear that the catalyst may be arranged away from the internal combustion engine. On the other hand, if the direction of the exhaust gas flowing into the swirling flow generation part may be different from the direction of the axis of rotation of the swirling flow, as in the present invention, the swirling flow generation part can be formed in the bent portion of the exhaust passage. That is, the swirling flow generation part can be formed at a more upstream side of the exhaust passage. As a result of this, the catalyst can also be formed at the more upstream side of the exhaust passage, so that the catalyst can be brought close to the internal combustion engine. In addition, the direction of the exhaust gas flowing into the swirling flow generation part becomes close to the direction of rotation of the swirling flow, so that the swirling of the exhaust gas can be promoted. Moreover, it is not necessary to arrange the swirling flow generation part away from said bent portion at the downstream side thereof, and hence, it also becomes possible to achieve the miniaturization of the apparatus as a whole. Then, if the catalyst is arranged at the downstream side of the swirling flow generation part, the concentration of the additive agent flowing into the catalyst can be made to be more uniform.

In addition, in the present invention, said swirling flow generation part may be provided with a spiral portion which is formed into a spiral shape around the central axis of the exhaust passage at the downstream side of said bent portion, and at least a part of said spiral portion may be located on an extension line of the exhaust passage upstream of said bent portion.

The spiral portion has a spiral axis extending from the bent portion toward the downstream side of the exhaust passage, and goes to the downstream side, while rotating around said spiral axis. The spiral portion may be a plate-shaped member in which the direction of the spiral axis becomes a plate thickness direction, for example. This plate-shaped member may extend from the spiral axis to a wall surface of the exhaust passage in the radial direction of the exhaust passage. A spiral passage is formed by this spiral portion. By the exhaust gas flowing along such a spiral portion, it is possible to generate a swirling flow in the exhaust gas. Then, the spiral axis becomes the axis of rotation of the swirling flow.

Moreover, when at least a part of the spiral portion is located on the extension line of the exhaust passage at the upstream side of the bent portion, the flow of the exhaust gas going to the bent portion from the exhaust passage at the upstream side of the bent portion flows into the spiral passage as it is. Here, the direction of the exhaust gas flowing toward the spiral portion from the exhaust passage at the upstream side of the bent portion has an angle with respect to the spiral axis. That is, the exhaust gas flows into the swirling flow generation part from an oblique direction or a right angle direction with respect to the spiral axis. Then, an angle at the time when the exhaust gas flows into the spiral passage from the oblique direction or the right angle direction becomes shallower or smaller than that in the case where the exhaust gas flows into the spiral passage from the axial direction of the swirling flow. As a result of this, a component of the swirling flow in the direction of rotation thereof becomes larger, so that the rotating force of the swirling flow can be enhanced. According to this, it is possible to cause the additive agent to disperse into a wider range.

Further, in the present invention, said spiral portion can be provided in an upstream side end portion thereof with a guide portion that serves to guide the flow of the exhaust gas to the direction of rotation of the swirling flow.

In that case, it is possible to suppress the exhaust gas from flowing in a reverse direction with respect to the direction of rotation of the swirling flow, so that the generation of the swirling flow becomes smooth.

In addition, in the present invention, said swirling flow generation part can be provided with a plurality of holes extending therethrough in a direction of a central axis of the swirling flow.

Here, when the swirling flow is generated, the additive agent may be located unevenly at the side of the wall surface of the exhaust passage due to a centrifugal force, so that the concentration of the additive agent can be low in the vicinity of the central axis of the exhaust passage at the downstream side of the swirling flow generation part. As a result of this, the concentration of the additive agent in the exhaust gas flowing into the downstream catalyst, etc., becomes nonuniform in the radial direction of the exhaust passage. To cope with this, in the present invention, by the provision of the holes extending through the swirling flow generation part (hereinafter, also referred to as through holes), the exhaust gas may pass through said through holes. These through holes may also be holes which extend through the spiral portion. With the additive agent having passed through these through holes, the concentration of the additive agent at the side of the central axis of the exhaust passage becomes higher, and hence, the concentration of the additive agent in the radial direction of the exhaust passage can be made to be more uniform.

Moreover, in the present invention, a hole area ratio of said plurality of holes may be equal to or more than 8 %, and equal to or less than 24 %.

The hole area ratio is a ratio of the area of the through holes with respect to an entire area of a surface of the swirling flow generation part directed to the upstream side of the exhaust passage. This may also be a ratio of the area of the through holes with respect to an entire area of a surface of the spiral portion directed to the upstream side of the exhaust passage. That is, the larger the hole area ratio, the larger becomes the total area of the through holes. The total area of the through holes becoming larger includes that the number of the through holes increases, or that the area per one of the through holes increases. Here, when the hole area ratio is too small, it will become difficult to offset the influence of the swirling flow. That is, the amounts of the exhaust gas and the additive agent passing through the through holes become small, so it becomes difficult to make high the concentration of the additive agent in the vicinity of the central axis of the exhaust passage at the downstream side of the swirling flow generation part. On the other hand, when the hole area ratio is too large, the amounts of the exhaust gas and the additive agent passing through the through holes become large, so the concentration of the additive agent in the vicinity of the central axis of the exhaust passage at the downstream side of the swirling flow generation part becomes excessively high. That is, the effect of the swirling flow becomes small. Accordingly, there is a proper range in the hole area ratio, and hence, by making the hole area ratio equal to or more than 8 % and equal to or less than 24 %, the concentration of the additive agent in the radial direction of the exhaust passage can be made to be more uniform.

[EFFECT OF THE INVENTION]

According to the present invention, it is possible to arrange a catalyst close to an internal combustion engine, while making uniform the concentration of an additive agent in an exhaust gas flowing into the catalyst.

[BRIEF DESCRIPTION OF THE DRAWINGS]

[Fig. 1] is a cross sectional view of surroundings of a mixer according to a first embodiment of the present invention.
[Fig. 2] is a perspective view of the mixer according to the first embodiment of the present invention.
[Fig. 3] is a view showing an external appearance of a mixer according to a second embodiment of the present invention.
[Fig. 4] is a view showing a flow of an exhaust gas by means of arrows in the case where the mixer according to the second embodiment of the present invention is not provided.
[Fig. 5] is a view showing a flow of an exhaust gas by means of arrows in the case where the mixer according to the second embodiment of the present invention is provided.
[Fig. 6] is a view showing the relation between a hole area ratio and uniformity of the flow in a spiral plate.

[MODES FOR CARRYING OUT THE INVENTION]

Hereinafter, modes for carrying out the present invention will be exemplarily described in detail based on embodiments thereof with reference to the attached drawings. However, the dimensions, materials, shapes, relative arrangements and so on of component parts described in the embodiments are not intended to limit the scope of the present invention to these alone in particular as long as there are no specific statements.

<First Embodiment>

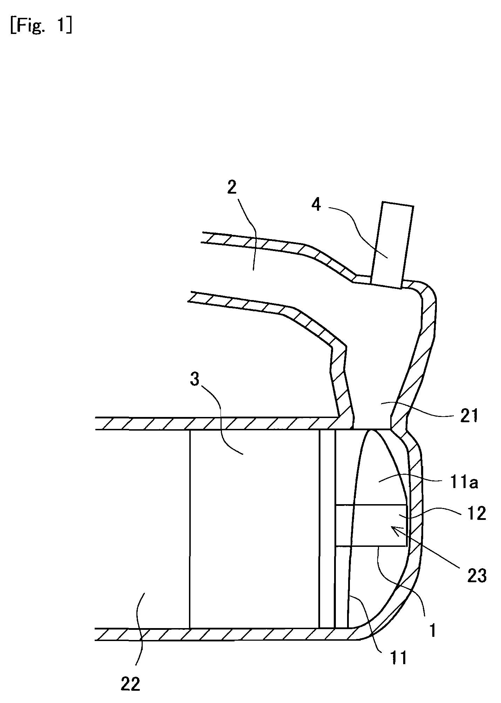

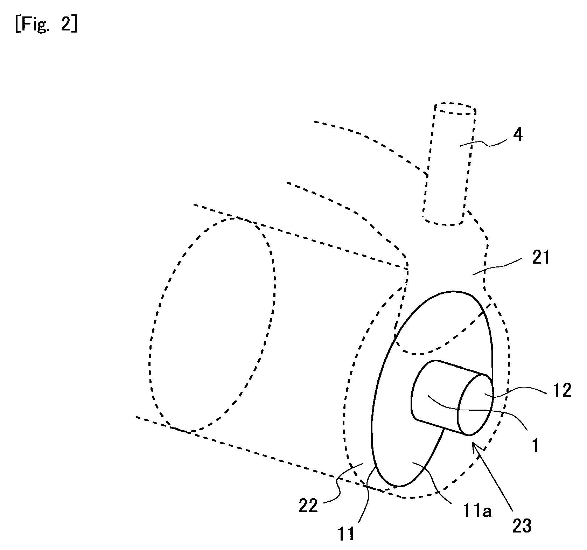

Fig. 1 is a cross sectional view of surroundings of a mixer 1 according to a first embodiment of the present invention. Also, Fig. 2 is a perspective view of the mixer 1 according to this first embodiment of the present invention. The mixer 1 according to this embodiment is arranged in an exhaust passage 2 of the internal combustion engine. The exhaust passage 2 is constructed to be provided with an upstream side straight portion 21 and a downstream side straight portion 22. The upstream side straight portion 21 and the downstream side straight portion 22 have each a central axis which is a straight line. In addition, the exhaust passage 2 is bent at a bent portion 23. The bent portion 23 may also be a location which has a curvature in the exhaust passage 2. Moreover, the bent portion 23 may also be an intersection between the central axis of the upstream side straight portion 21 and the central axis of the downstream side straight portion 22 in a cross sectional as shown in Fig. 1. Further, the bent portion 23 may also be defined as a predetermined range from the intersection between the upstream side straight portion 21 and the downstream side straight portion 22. Furthermore, the bent portion 23 may also be a location at which the upstream side straight portion 21 and the downstream side straight portion 22 intersect with each other. Still further, the bent portion 23 may also be a location at which the direction of the flow of the exhaust gas changes. Here, note that in this embodiment, the upstream side straight portion 21 has a cross sectional area larger than that of the downstream side straight portion 22, but these cross sectional areas may be the same.

The mixer 1 is formed in the downstream side straight portion 22 including the bent portion 23. In addition, the catalyst 3 is formed in the downstream side straight portion 22 at the downstream side of the mixer 1. Moreover, an addition valve 4, which serves to supply an additive agent into the exhaust gas, is formed in the upstream side straight portion 21 or at the upstream side of the upstream side straight portion 21. The additive agent may also be a reducing agent or an oxidizing agent. Here, note that in this embodiment, the additive agent is supplied by the use of the addition valve 4, but instead of this, the additive agent may be discharged from the internal combustion engine. Also, note that in this embodiment, the addition valve 4 corresponds to a supply device in the present invention.

The catalyst 3 is one which, by being supplied with the additive agent, rises in temperature, purifies the exhaust gas, or recovers its purification ability. As the catalyst 3, there can be mentioned, for example, an NOx storage reduction catalyst, an NOx selective reduction catalyst, a three-way catalyst, an oxidation catalyst, a hydrolysis catalyst, and so on. In addition, the catalyst 3 may also be one having an oxidation function. Moreover, the catalyst 3 may be provided with a particulate filter which traps particulate matter, and the particulate filter may be used as a carrier for the catalyst 3. Also, the catalyst 3 may be disposed at the upstream side of the particulate filter.

The mixer 1 is formed in the downstream side straight portion 22 around the central axis thereof, and is constructed to be provided with a spiral plate 11 which is spirally disposed around the central axis of the downstream side straight portion 22. A shaft portion 12 of a cylindrical shape is formed around a spiral axis of the spiral plate 11. The spiral plate 11 is a plate-shaped member which extends from the shaft portion 12 to an inner wall surface of the downstream side straight portion 22, wherein the plate-shaped member has a plate thickness direction arranged in a central axis direction of the downstream side straight portion 22, and is displaced to the downstream side, while turning around the central axis of the downstream side straight portion 22 in one direction. For the spiral plate 11, there is used a material which can withstand the heat of the exhaust gas, and, for example, a plate-shaped stainless steel material is used.

The spiral plate 11 is formed on an extension line of the upstream side straight portion 21. Here, note that the spiral plate 11 may be formed on an extension line of the central axis of the upstream side straight portion 21. In addition, when it is assumed that the upstream side straight portion 21 is extended to the central axis direction of the upstream side straight portion 21, at least a part of the upstream side straight portion 21 and at least a part of the spiral plate 11 should only cross each other. Moreover, the exhaust gas should only arrive at the spiral plate 11, with the direction of the flow of the exhaust gas being at an angle with respect to the spiral axis of the spiral plate 11. Here, note that in this embodiment, the mixer 1 corresponds to a swirling flow generation part in the present invention. Also, in this embodiment, the spinal plate 11 corresponds to a spinal portion in the present invention.

With the mixer 1 as constructed in this manner, the exhaust gas with an angle with respect to the spiral axis of the spiral plate 11 flows toward the mixer 1. This angle is substantially equal to an angle formed by the central axis of the upstream side straight portion 21 and the central axis of the downstream side straight portion 22. Then, the exhaust gas with the angle with respect to the spiral axis of the spiral plate 11 impinges against the spiral plate 11, and flows along the spiral plate 11, while changing its angle. In this manner, at a point in time when the exhaust gas impinges against the spiral plate 11, the exhaust gas flows into the mixer 1. That is, the exhaust gas flows into the mixer 1, within a time in which the angle of the exhaust gas flowing through the upstream side straight portion 21 does not substantially change. This can be said that the exhaust gas flows into the mixer 1 on the extension line of the upstream side straight portion 21 in the direction of movement of the exhaust gas flowing toward the bent portion 23. Here, note that the exhaust gas may flow into the mixer 1 from the radial direction of the mixer 1. In this manner, the exhaust gas flowing into the mixer 1 flows spirally along the spiral plate 11. That is, a spiral-shaped passage (hereinafter, referred to as a spiral passage 11 a) is formed by means of the spiral plate 11. Thus, in this embodiment, the spiral passage 11 a is formed in the surroundings of the central axis of the downstream side straight portion 22.

The exhaust gas flowing through the spiral passage 11 a becomes a swirling flow at the downstream side of the mixer 1. Mixing of the additive agent and the exhaust gas is promoted by this swirling flow, so that the concentration of the additive agent in the exhaust gas flowing into the catalyst 3 becomes more uniform. In addition, because the exhaust gas with the angle with respect to the spiral axis of the spiral plate 11 flows into the mixer 1, it is not necessary to separate the mixer 1 from the bent portion 23. Then, the catalyst 3 can be disposed at a more upstream side, by bringing the mixer 1 close to the bent portion 23. That is, the catalyst 3 can be brought close to the internal combustion engine, so that the temperature of the catalyst 3 can be made to rise quickly, and the catalyst can be maintained at high temperature.

<Second Embodiment>

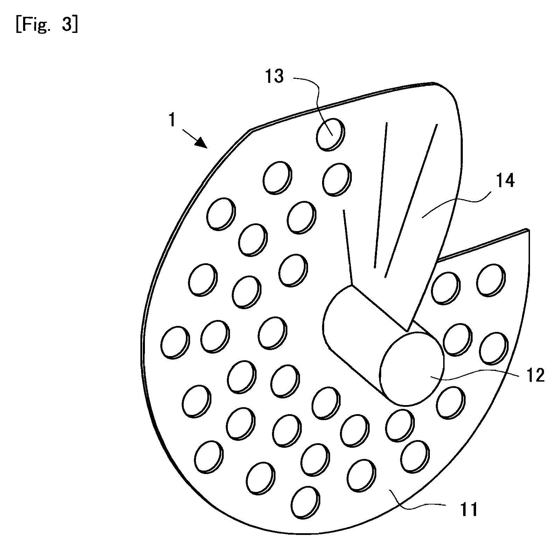

Fig. 3 is a view showing an external appearance of a mixer 1 according to a second embodiment of the present invention. In this second embodiment, a spiral plate 11 has a plurality of through holes 13. These through holes 13 may also be holes which extend through in a central axis direction of a downstream side straight portion 22.

In addition, a guide portion 14, which guides the exhaust gas in the direction of rotation of a swirling flow, is formed in the vicinity of an upstream side end portion of the spiral plate 11. The guide portion 14 may also be a part of the spiral plate 11. The guide portion 14 serves to suppress the exhaust gas flowing from an upstream side straight portion 21 from flowing in a reverse direction with respect to the direction of rotation of the swirling flow. For this reason, the guide portion 14 is formed in such a manner that its upstream end is in contact with a wall surface of an exhaust passage 2. That is, the guide portion 14 closes an upstream side end portion of a spiral passage 11 a.

The guide portion 14 may also be a part of the spiral plate 11 which is somewhat processed or worked. In this case, the upstream side end portion of the spiral plate 11 is bent toward the upstream side of a spiral axis of the spiral plate 11, so as to extend until it arrives at the wall surface of the exhaust passage 2. Then, the upstream side end portion of the spiral plate 11 is formed so as to conform to the shape of the inner wall surface of the exhaust passage 2. Here, note that the guide portion 14 may also be based on another member which is different from the spiral plate 11. In addition, the guide portion 14 is not necessarily required. Moreover, the guide portion 14 may also be provided in the first embodiment. Then, the exhaust gas with an angle with respect to the spiral axis of the spiral plate 11 impinges against the guide portion 14 so as to be changed in its angle, and thereafter flows along the spiral plate 11. Thus, at a point in time when the exhaust gas impinges against the guide plate 14, the exhaust gas flows into the mixer 1. In this manner, the exhaust gas flows into the mixer 1 on an extension line of the upstream side straight portion 21 in the direction of movement of the exhaust gas flowing toward a bent portion 23.

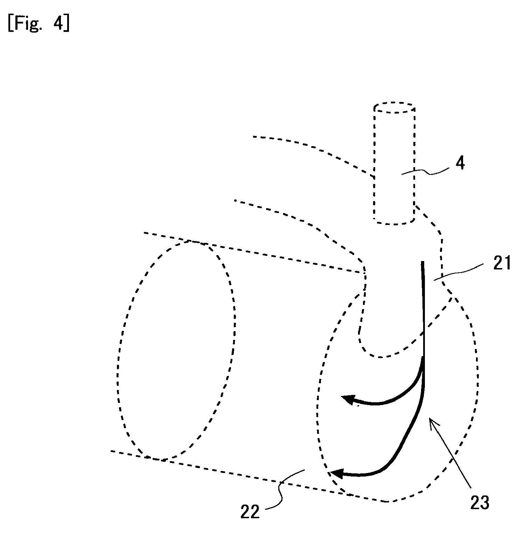

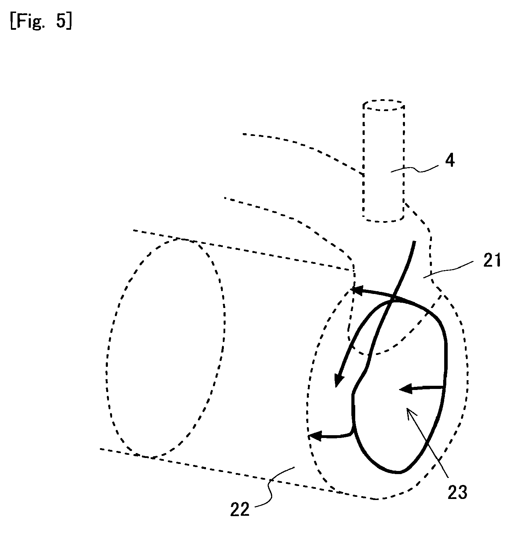

Here, Fig. 4 is a view showing a flow of the exhaust gas by means of arrows in the case where the mixer 1 according to this second embodiment is not provided. In addition, Fig. 5 is a view showing a flow of the exhaust gas by means of arrows in the case where the mixer 1 according to this second embodiment is provided.

In the case where the mixer 1 is not provided, in the downstream side straight portion 22 in the vicinity of the bent portion 23, the exhaust gas mainly flows at the side far from the upstream side straight portion 21. On the other hand, in the case of the provision of the mixer 1, a swirling flow is generated, so that uneven distribution of the exhaust gas can be suppressed.

However, when the swirling flow is generated, the exhaust gas and the additive agent may be located unevenly at the side of a wall surface of the downstream side straight portion 22 due to a centrifugal force, so that the concentrations of the exhaust gas and the additive agent can be low in the vicinity of the central axis of the downstream side straight portion 22. In contrast to this, in this embodiment, due to the provision of the through holes 13 in the spiral plate 11, the exhaust gas and the additive agent pass through the through holes 13. Then, at the downstream side of the mixer 1, the swirling flow flowing along the spiral plate 11 and the flow of the exhaust gas and the additive agent passing through the through holes 13 to go to the downstream side are mixed with each other, so that the concentration of the additive agent becomes uniform. That is, by the exhaust gas and the additive agent passing through the through holes 13, it is possible to increase the concentrations of the exhaust gas and the additive agent at the side of the central axis of the swirling flow.

Here, let us consider a case where the exhaust gas flows into the mixer 1 from the central axis direction of the swirling flow. Even if the exhaust gas flows in from the central axis direction of the swirling flow, the swirling flow can be generated by the mixer 1 according to this embodiment. However, when the through holes 13 are formed in the same direction as the direction in which the exhaust gas flows, it will become easy for the exhaust gas to pass through the through holes 13. For this reason, the additive agent comes to go straight forward, so that the concentration of the additive agent becomes high in locations in which the through holes 13 are projected to the catalyst 3.

On the other hand, as in this embodiment, when the exhaust gas flows into the mixer 1 at an angle with respect to the central axis of the swirling flow, it will become easy for the exhaust gas to flow along the spiral plate 11. That is, it becomes difficult for the exhaust gas to pass through the through holes 13. Then, the exhaust gas passing through the through holes 13 flows into the through holes 13 from an oblique direction with respect to the through holes 13, whereby the turbulence of the exhaust gas becomes large. As a result of this, the additive agent can be made to disperse in a wide area, so that the concentration of the additive agent can be made more uniform.

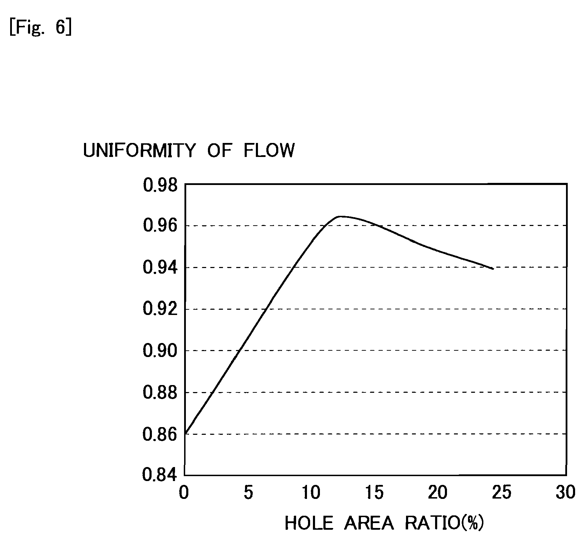

Here, Fig. 6 is a view showing the relation between a hole area ratio and uniformity of the flow in the spiral plate 11. The hole area ratio is a value which is obtained by dividing the area of the through holes 13 by an area of a surface of the spinal plate 11 directed to the upstream side of the exhaust gas in the case of assuming that the through holes 13 do not exist. The uniformity (the degree of uniformity) of the flow represents the degree of uniformity of the additive agent in the exhaust gas in the radial direction of the catalyst 3, and is defined as follows.

[Expression 1]

$$\overline{W} = \frac{\sum W_i}{n}$$

$$\Phi_i = \frac{\sqrt{(W_i - \overline{W})^2}}{\overline{W}}$$

$$\Phi = \frac{\sum \Phi_i}{n}$$

$$\gamma = 1 - \frac{\Phi}{2}$$

Here, note that r is the degree of uniformity; $W_i$ is the value of each point (e.g., concentration); $\Phi$ is a variance index; and n is the number of points of measurement.

This degree of uniformity is equal to or less than 1, and it is shown that the closer to 1 the degree of uniformity, the closer to uniformity the concentrations of the additive agent and the exhaust gas are. Here, note that in this embodiment, the degree of uniformity is defined by the above-mentioned expression, but other values indicating the extent or degree of uniformity in the concentrations of the additive agent and the exhaust gas can also be used.

As shown in Fig. 6, in a range of 12 - 13 % of the hole area ratio, the uniformity of the flow exceeds 0.96 and becomes the highest. Accordingly, by forming the through holes 13 so that the hole area ratio thereof falls within this range, the concentrations of the additive agent and the exhaust gas become the most uniform. However, for example, in cases where pressure loss in the spiral plate 11 is large even if the concentrations of the additive agent and the exhaust gas become uniform, it may be better to make the hole area ratio large. Thus, in this embodiment, assuming that the uniformity, being 0.94 or more, is in an allowable range, the hole area ratio is set between 8 - 24 %. An optimum value for the number of the through holes 13 may be obtained by means of experiments, simulations, or the like. In addition, although the through holes 13 may be uniformly disposed in the spiral plate 11, an optimal layout or arrangement thereof may be obtained through experiments or simulations.

As described above, according to this embodiment, the generation of the swirling flow is carried out more smoothly by means of the guide portion 14. In addition, the concentration of the additive agent can be made more uniform by means of the through holes 13.

[EXPLANATION OF REFERENCE NUMERALS AND CHARACTERS]

| | |
|---|---|
| 1 | mixer |
| 2 | exhaust passage |
| 3 | catalyst |
| 4 | addition valve |
| 11 | spiral plate |
| 11a | spiral passage |
| 12 | shaft portion |
| 13 | through holes |
| 14 | guide portion |
| 21 | upstream side straight portion |
| 22 | downstream side straight portion |
| 23 | bent portion |

**Claims**

1. An exhaust gas purification apparatus for an internal combustion engine, wherein:

   a supply device (4) that supplies an additive agent into an exhaust passage (2) of the internal combustion engine;
   a catalyst (3) that is arranged in said exhaust passage (22) at the downstream side of said supply device (4);

a bent portion (23) that is a location at which said exhaust passage bends (2), and which is formed at the downstream side of said supply device (4) and at the upstream side of said catalyst (3); and

a swirling flow generation part (1) that is formed in said bent portion (23) so as to permit an exhaust gas to come therein on an extension line in a direction of movement of the exhaust gas which flows toward said bent portion (23) at the upstream side thereof, thereby to generate a swirling flow in which the exhaust gas swirls around a central axis of the exhaust passage (22) at the downstream side of said bent portion (23), wherein

said swirling flow generation part (1) being provided with a spiral portion (11) that is formed into a spiral shape around the central axis of the exhaust passage (22), at least a part (11 a) of said spiral portion (11) is located on an extension line of the exhaust passage (21) upstream of said bent portion (23), and the exhaust passage (22) at the downstream side of said bent portion (23) linearly extends up to the catalyst (3) in the direction of an axis of rotation of the swirling flow,

the apparatus further **characterized in that** the spiral portion (11) is provided at the downstream side of said bent portion (23).

2. The exhaust gas purification apparatus for an internal combustion engine as set forth in claim1, **characterized in that**
said spiral portion (11) is provided in an upstream side end portion thereof with a guide portion (14) that serves to guide a flow of the exhaust gas to a direction of rotation of the swirling flow.

3. The exhaust gas purification apparatus for an internal combustion engine as set forth in claim 1 or 2, **characterized in that**
said swirling flow generation part (1) is provided with a plurality of holes (13) extending therethrough in a direction of a central axis of the swirling flow.

4. The exhaust gas purification apparatus for an internal combustion engine as set forth in claim 3, **characterized in that**
said plurality of holes (13) has a hole area ratio which is equal to or more than 8 % and is equal to or less than 24 %.

**Patentansprüche**

1. Abgasreinigungsvorrichtung für eine Verbrennungskraftmaschine, aufweisend:

eine Zuführvorrichtung (4), die ein Additiv in einen Abgasstrang (2) der Verbrennungskraftmaschine einbringt;

einen Katalysator (3), der in dem Abgasstrang (22) auf der Stromabwärtsseite der Zuführvorrichtung (4) angeordnet ist;

einen gekrümmten Abschnitt (23), der sich an einer Position befindet, an der sich der Abgasstrang (2) krümmt, und der an der Stromabwärtsseite der Zuführvorrichtung (4) und an der Stromaufwärtsseite des Katalysators (3) ausgebildet ist; und

ein Wirbelströmungserzeugungsteil (1), das in dem gekrümmten Abschnitt (23) ausgebildet ist, um es einem Abgas zu ermöglichen, in einer Verlängerungsleitung in einer Bewegungsrichtung des Abgases, das an der Stromaufwärtsseite des gekrümmten Abschnitts (23) in Richtung desselben strömt, hineinzugelangen, wodurch eine Wirbelströmung erzeugt wird, in der das Abgas um eine Mittelachse des Abgasstrangs (22) an der Stromabwärtsseite des gekrümmten Abschnitts (23) wirbelt, wobei das Wirbelströmungserzeugungsteil (1) über einen spiralförmigen Abschnitt (11) verfügt, der um die Mittelachse des Abgasstrangs (22) herum in einer Spiralform ausgebildet ist, wobei sich zumindest ein Teil (11a) des spiralförmigen Abschnitts (11) in einer Verlängerungsleitung des Abgasstrangs (21) stromaufwärts von dem gebogenen Abschnitt (23) befindet, und wobei der Abgasstrang (22) an der Stromabwärtsseite des gekrümmten Abschnitts (23) linear nach oben zu dem Katalysator (3) in der Richtung einer Drehachse der Wirbelströmung verläuft, die Vorrichtung ferner **dadurch gekennzeichnet ist, dass** sich der spiralförmige Abschnitt (11) an der Stromabwärtsseite des gekrümmten Abschnitts (23) befindet.

2. Abgasreinigungsvorrichtung für eine Verbrennungskraftmaschine nach Anspruch 1, **dadurch gekennzeichnet, dass**
sich der spiralförmige Abschnitt (11) in einem stromaufwärtsseitigen Endabschnitt desselben mit einem Führungsabschnitt (14) befindet, der dazu dient, eine Strömung des Abgases zu einer Drehrichtung der Wirbelströmung zu führen.

3. Abgasreinigungsvorrichtung für eine Verbrennungskraftmaschine nach Anspruch 1 oder 2, **dadurch gekennzeichnet, dass**
das Wirbelströmungserzeugungsteil (1) mit einer Mehrzahl an Löchern (13) versehen ist, die in einer Richtung einer Mittelachse der Wirbelströmung dadurch verlaufen.

4. Abgasreinigungsvorrichtung für eine Verbrennungskraftmaschine nach Anspruch 3, **dadurch gekennzeichnet, dass**

die Mehrzahl an Löchern (13) ein Loch-/Flächen-Verhältnis aufweisen, das größer oder gleich 8 % und kleiner oder gleich 24 % ist.

## Revendications

1. Appareil de purification de gaz d'échappement pour un moteur à combustion interne, dans lequel :

un dispositif d'alimentation (4) délivre un agent additif dans un passage d'échappement (2) du moteur à combustion interne ;
un catalyseur (3) est disposé dans ledit passage d'échappement (22) sur le côté aval dudit dispositif d'alimentation (4) ;
une partie coudée (23) est un emplacement au niveau duquel ledit passage d'échappement s'incurve (2), et est formée sur le côté aval dudit dispositif d'alimentation (4) et sur le côté amont dudit catalyseur (3) ; et
une partie de génération d'écoulement tourbillonnant (1) est formée dans ladite partie coudée (23) de façon à permettre à un gaz d'échappement de venir sur une ligne d'extension dans une direction de mouvement du gaz d'échappement qui s'écoule vers ladite partie coudée (23) sur le côté amont, pour générer ainsi un écoulement tourbillonnant dans lequel le gaz d'échappement tourbillonne autour d'un axe central du passage d'échappement (22) sur le côté aval de ladite partie coudée (23), dans lequel
ladite partie de génération d'écoulement tourbillonnant (1) est pourvue d'une partie de spirale (11) qui est formée en une forme de spirale autour de l'axe central du passage d'échappement (22), au moins une partie (11a) de ladite partie de spirale (11) est située sur une ligne d'extension du passage d'échappement (21) en amont de ladite partie coudée (23), et le passage d'échappement (22) sur le côté aval de ladite partie coudée (23) s'étend linéairement jusqu'au catalyseur (3) dans la direction d'un axe de rotation de l'écoulement tourbillonnant, l'appareil étant **caractérisé en ce que** la partie de spirale (11) est prévue sur le côté aval de ladite partie coudée (23).

2. Appareil de purification de gaz d'échappement pour un moteur à combustion interne selon la revendication 1, **caractérisé en ce que**
ladite partie de spirale (11) est pourvue dans une partie d'extrémité du côté amont d'une partie de guidage (14) qui sert à guider un écoulement du gaz d'échappement jusqu'à une direction de rotation de l'écoulement tourbillonnant.

3. Appareil de purification de gaz d'échappement pour un moteur à combustion interne selon la revendication 1 ou 2, **caractérisé en ce que**
ladite partie de génération d'écoulement tourbillonnant (1) est pourvue d'une pluralité de trous (13) s'étendant à travers dans une direction d'un axe central de l'écoulement tourbillonnant.

4. Appareil de purification de gaz d'échappement pour un moteur à combustion interne selon la revendication 3, **caractérisé en ce que**
ladite pluralité de trous (13) a un rapport de section de trou qui est égal ou supérieur à 8 % et est égal ou inférieur à 24 %.

[Fig. 1]

[Fig. 2]

[Fig. 3]

[Fig. 4]

[Fig. 5]

[Fig. 6]

UNIFORMITY OF FLOW

**EP 2 823 880 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080047260 A1
- JP 2011092838 A
- JP 2012225316 A
- JP 2010146285 A
- JP 2010031717 A

16